# EUROPÄISCHE PATENTSCHRIFT

(11) **EP 0 472 756 B1**
(45) Veröffentlichungstag und Bekanntmachung des Hinweises auf die Patenterteilung: **16.08.1995**
(21) Anmeldenummer: 90116531.6
(22) Anmeldetag: 29.08.1990
(51) Int. Cl.: H04N 7/087, H04L 7/033

(54) **Signal-Abtrennvorrichtung**
Device for separating a signal
Dispositif de séparation de signal

(43) Veröffentlichungstag der Anmeldung: 04.03.1992
(73) Patentinhaber: Deutsche ITT Industries GmbH, 79108 Freiburg (DE)
(72) Erfinder: Sieben, Ulrich, Dr., D-7801 Reute (DE)

(56) Entgegenhaltungen:
- EP-A- 0 023 852
- EP-A- 0 044 402
- EP-A- 0 342 736
- DE-A- 3 624 375
- GB-A- 2 129 658
- US-A- 4 594 516
- US-A- 4 672 639
- US-A- 4 673 979
- US-A- 4 768 208
- US-A- 4 794 626
- 1988 INTERNATIONAL CONFERENCE ON CONSUMER ELECTRONICS, Band 34, Teil 1, Nr. 3, August 1988, Seiten 793-799, IEEE, New York, US; H. MATSUE et al.: "Teletext equalizer LSI"

## Beschreibung

Die Erfindung betrifft eine Signal-Abtrennvorrichtung, insbesondere eine Teletextsignal-Abtrennvorrichtung, nach dem Oberbegriff des Anspruchs 1.

Obwohl im folgenden eine Verarbeitungseinrichtung zur Wiedergewinnung einer Teletextbitfolge aus den Abtastwerten einer mit einem Fernsehsignal empfangenen Teletextbitfolge beschrieben wird, wobei das Teletextsignal mit einem Abtasttakt abgetastet wurde, dessen Frequenz höher als die Frequenz der Teletextbitfolge ist, stellt das Fernsehsignal lediglich einen Spezialfall eines Transportsignals und die Teletextbitfolge einen Spezialfall einer damit transportierten Signalbitfolge dar.

Wann immer eine Signalbitfolge mit einer Abtastfrequenz abgetastet wird, die kein ganzzahliges Vielfaches der Signalfrequenz ist und/oder wenn nur sehr wenige Abtastwerte pro Signalbit geliefert werden, läßt sich eine Signal-Abtrennvorrichtung der hier beschriebenen Art zur Erhöhung der Zuverlässigkeit der Schätzung der Werte von Signalbit einsetzen.

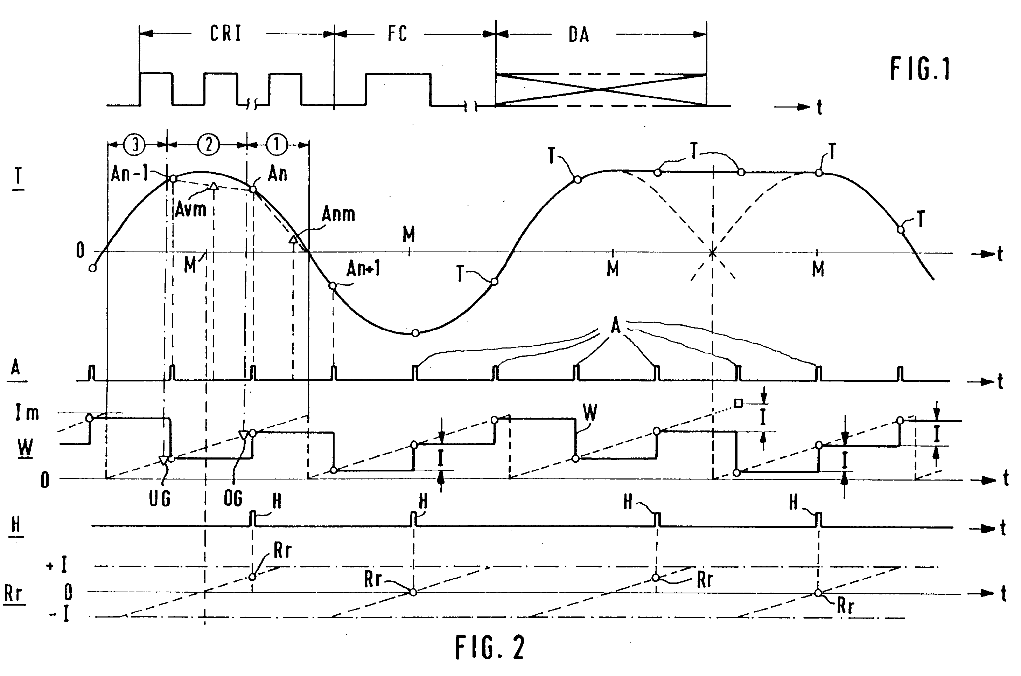

Seit Teletext (Videotext) eingeführt wurde, können Fernsehgeräte, die mit entsprechenden Dekodern ausgerüstet sind, zusätzliche Nachrichten und Informationen empfangen. Die Übertragung dieser Informationen erfolgt gleichzeitig mit dem Bild in einem normalen Fernsehkanal. Dargestellt wird diese Information in Form von Informationsseiten, die aus Text und Grafik bestehen können und während der Vertikal-Austastlücke zeilenweise übertragen werden. Die mit dem Bild-Austast-Synchron-Signal, kurz BAS-Signal genannt, übertragenen Teletextdaten müssen durch den Dekoder in einen fehlerfreien digitalen Datenstrom umgewandelt werden. Der Aufbau solcher Teletextdatenzeilen ist in Fig. 1 skizzenhaft dargestellt. Eine Teletextdatenzeile beginnt mit einer Reihe von Taktsynchronisationsimpulsen, dem sogenannten "Clock-Run-In" (CRI), denen sich ein Rahmencode, der auch als "Framing-Code" bezeichnet wird, anschließt. Diesen Signalteilen, die der Synchronisation dienen, folgen die Daten, die in 8 Bit breiten Datenworten zusammengefaßt sind. Der "Clock-Run-In" besteht aus einer Folge von sich abwechselnden "0" und "1", ist zwei Byte lang, stellt die höchste im Teletextsignal vorkommende Frequenz dar und soll es der Teletextsignal-Abtrennvorrichtung, die Teil des Teletextdekoders ist, ermöglichen, sich mit dem Bitstrom zu synchronisieren. Der "Framing-Code" ist ein Byte lang und dient u.a. der Erkennung der Bytegrenzen innerhalb eines Teletextsignals.

Das Teletextsignal, das eine Bitfolgefrequenz aufweist, die vom jeweiligen Teletextstandard abhängt, wird mit einer Taktfrequenz des Fernsehgeräts abgetastet. Die Frequenz, mit der das Teletextsignal abgetastet wird, ist nicht mit der Teletextbitfolgefrequenz verknüpft. Bei einer bekannten farbträgerverkoppelten Abtastung liegt die Abtastfrequenz zum Beispiel bei dem Vierfachen der Farbträgerfrequenz. Die verwendeten Teletextbitfolgefrequenzen sind recht hoch, so daß in diesem Fall bei NTSC oder PAL die Abtastfrequenz nur etwa das 2,5-fache der Bitfrequenz beträgt. Die bei der Digitalisierung des Teletextsignals verwendete Abtastfrequenz ist also mindestens bei diesen Fernsehnormen kein ganzzahliges Vielfaches der senderseitig benutzten Teletextbitfolgefrequenz. Das bedeutet, daß die Abtastzeitpunkte des Teletextsignals nicht phasenstarr mit dem Teletextsignal zusammenhängen sondern, wenn zum Beispiel die Teletextbitmitte als Bezugspunkt genommen wird, diese und die Abtastzeitpunkte gegeneinander driften. Die Abtastzeitpunkte liegen also bei aufeinanderfolgenden Teletextbits nicht immer an derselben Stelle eines Teletexbits sondern wandern zum Beispiel von einer Flanke über das Dach bis zur zweiten Flanke. Dies gilt sinngemäß auch für reale Teletextsignale, die erheblich von der Rechteckform abweichen, beispielsweise etwa sinusförmigen Verlauf annehmen können. Bei dem betrachteten Frequenzverhältnis stehen zur Schätzung der binären Werte der einzelnen Teletextbits, also für-die Bestimmung, ob es sich bei dem aktuellen Teletextbit um eine logische "0" oder "1" handelt, nicht mehr als durchschnittlich 2,5 Abtastwerte zur Verfügung, so daß eine zuverlässige Wiedergewinnung des Teletextsignals nicht von vornherein sichergestellt ist. Ein Versuch, eine solche Schätzung vorzunehmen besteht darin, von den aufeinanderfolgenden Abtastwerten nur einen Teil auszuwählen, und zwar alternierend jeweils den zweiten bzw. dritten Abtastwert (2-3-Rhytmus), die je als für den Wert eines Teletextbits repräsentativ betrachtet werden. Jedoch kann Rauschen auf dem Teletextsignal u.a. zu falschem Beginn dieser alternierenden Auswahl und daher zu fehlerhafter Schätzung der Werte der Teletextbits führen. Da in der bekannten Schaltung für das oben aufgeführte Beispiel die Abtastfrequenz so gewählt wurde, daß sie nur ungefähr 2,5 mal so groß wie die Teletextbitfrequenz ist, geht die sichere Zuordnung der nach dem 2-3-Rhytmus ausgewählten Abtastwerte zu den einzelnen Teletextbits mit der Zeit verloren.

Ein Fernsehgerät hat auf den Tuner folgend ein Bandpaßfilter, das das gewünschte Signal aus dem empfangenen Frequenzgemisch herausfiltert. Ist, z. B. der Tuner nicht richtig abgestimmt, kann es zu einer Verformung des Teletextsignals kommen, was bei dem 2-3-Rhytmus wiederum zu einer fehlerhaften Bestimmung der Werte der Teletextbits führen kann.

In dem Dokument EP-A-0 342 736 wird eine Signal-Abtrennvorrichtung für eine Signalbitfolge beschrieben, deren Abtastrate ebenfalls nicht in einem ganzzahligen Verhältnis zur Bitfolgerate stehen muß. Die Nulldurchgänge des Datensignals werden dazu verwendet, die Phasenlage einer digitalen PLL Schaltung nachzuregeln, wobei die PLL Schaltung durch eine akkumulierende Addiererschleife gebildet wird, die mit jedem Arbeitstakt um einen definierten Wert ohne Beachtung des Überlaufs erhöht wird. Die mittlere Überlaufperiode des Akkumulators wird dabei mit der Datenrate der empfangenen Bitfolge verkoppelt.

Der vorliegenden Erfindung liegt die Aufgabe zugrunde, die Zuverlässigkeit der Schätzung der Werte von Signalbits zu verbessern.

Diese Aufgabe wird erfindungsgemäß durch die kennzeichnenden Merkmale des Anspruchs 1 gelöst.

Bei einer gemäß der Erfindung aufgebauten Teletextsignal-Abtrennvorrichtung wird mit Hilfe eines etwa in der Mitte der nachgebildeten Periodendauer abgegebenen Halbstandssignals eine Abschätzung für die Mitte des jeweiligen Teletextbits vorgenommen und von den innerhalb des Teletextbits auftretenden Abtastwerten derjenige ausgewählt, der zeitlich am dichtesten bei dem Zeitpunkt des Auftretens des Halbstandsignals liegt. Dadurch wird die Möglichkeit geschaffen, innerhalb der Zeitdauer eines jeden Teletextbits immer denjenigen Abtastwert als Schätzung für den Wert diese Teletextbits auszuwählen, der am dichtesten an der Mitte des Teletextbits liegt, also in einem Bereich, wo die Schätzung und der tatsächliche Wert mit höchster Wahrscheinlichkeit übereinstimmen.

Anders als bei der den starren 2-3-Rhytmus verwendenden Methode, bei welcher der jeweils zweite bzw. dritte Abtastwert zwangsweise auch dann ausgewählt wird, wenn er im Flankenbereich des jeweiligen Teletextbits liegt, also in einem Bereich, in dem sich Störungen stärker auswirken als im Mittenbereich eines Impulses, führt die erfindungsgemäße Methode dazu, daß die ausgewählten Abtastwerte meist in dem gegen Störungen wesentlich weniger empfindlichen Mittenbereich der Teletextbits liegen.

Eine erfindungsgemäße Teletextsignal-Abtrennvorrichtung ist so aufgebaut, daß sie eine Integriereinrichtung aufweist, die die Periodendauer eines Teletextbits nachbildet. Da die den logischen Wert des Teletextbits kennzeichnende Spannung im Mittenbereich des Teletextbits am größten ist, ist die Integriereinrichtung so aufgebaut, daß etwa in der Mitte der nachgebildeten Periodendauer ein Halbstandsignal ausgegeben wird. Ein gemeinsam mit dem Halbstandsignal ausgegebenes Restwertsignal kennzeichnet den Abstand zwischen der Mitte der nachgebildeten Periodendauer und dem zum Zeitpunkt des Auftretens des Halbstandsignals aktuellen Abtastwert. Das Restwertsignal wird einer Restwertsignalbewertungseinrichtung zugeführt, welche eine Restwertsignalbewertungstabelle enthält, die ein schnelles Umsetzen des jeweiligen Restwertsignals in ein Auswahlsteuersignal bzw. Korrektursteuersignal ermöglicht, ohne daß hierfür eine gewisse Rechenzeit zugestanden werden muß. Das so erzeugte Auswahlsteuersignal wird einer Auswahllogikschaltung zugeführt. Diese Auswahllogikschaltung ist Teil einer Auswahleinrichtung, der an einem Eingang die Abtastwerte des Teletextsignals zugeführt werden. Aus dem aktuellen Abtastwert und dem jeweils vorausgehenden Abtastwert wird ein Vorlaufmittelwert gebildet, während aus dem aktuellen Abtastwert und dem jeweils nachfolgenden Abtastwert ein Nachlaufmittelwert gebildet wird. Die Auswahllogikschaltung, der der aktuelle Abtastwert sowie der Nachlaufmittelwert und der Vorlaufmittelwert bereitgestellt werden, wählt in Abhängigkeit vom jeweiligen Auswahlsteuersignal den für die Schätzung des Werts des momentan betrachteten Teletextbits günstigsten Wert aus.

Von der Auswahleinrichtung wird einer Flankenlogikeinrichtung eine Reihe von aufeinanderfolgenden Abtastwerten zugeführt. Die Flankenlogikeinrichtung erzeugt ein Signalmuster, das die Phasenlage des jeweils aktuellen Abtastwerts in Bezug auf die diesem Abtastwert benachbarten Flanken der abgetasteten Teletextbitfolge kennzeichnet. Dieses von der Flankenlogikeinrichtung erzeugte Signalmuster, dem entnehmbar ist, ob sich der aktuelle Abtastwert bis auf einen vorbestimmten Abstand einer benachbarten Flanke des Teletextsignals genähert hat, wird gemeinsam mit einem von der Restwertsignalbewertungseinrichtung gelieferten Korrektursteuersignal einer Phasenkorrektureinrichtung zugeführt, die, wenn der aktuelle Abtastwert sich von der Teletextmitte entfernt, sich jedoch noch in dem durch einen oberen bzw. unteren Restschwellenwert gekennzeichneten Mittenbereich befindet, an die Integriereinrichtung ein Signal abgibt, wodurch der Zeitpunkt des von der Integriereinrichtung abgegebenen Halbstandsignals und/oder das Restwertsignal beeinflußt werden.

Die Integriereinrichtung wird bevorzugterweise durch einen Startimpuls, der von einem Startdetektor, welcher mit der Auswahleinrichtung verbunden ist und den Beginn der Teletextdatenzeile erkennt, gestartet. Die durch Schätzung erzeugten Teletextbits werden einem Rahmencodedetektor zugeführt, der nach Erkennen des Rahmencodes die Datenbits byteweise zur weiteren Verarbeitung bereitstellt. Darüber hinaus wird vorteilhafterweise vom Rahmencodedetektor nach Erkennen des Rahmencodes an die Integriereinrichtung ein Signal abgegeben, welches bewirkt, daß die Phasenkorrektureinrichtung für den Fall einer erforderlichen Korrektur nicht so stark Einfluß auf den Zeitpunkt des Auftretens des Halbstandsignals und/oder die Bildung des Restwertsignals nimmt, wie vor dem Erkennen des Rahmencodes.

Bevorzugterweise ist die Auswahleinrichtung so aufgebaut, daß sie ein erstes und ein zweites Register aufweist. Dem ersten Register werden bevorzugterweise die Vorzeichen der Abtastwerte des Teletextbits zugeführt, während dem zweiten Register die in einer Mittelwertbildungsschaltung gebildeten Mittelwerte von jeweils zwei aufeinanderfolgenden Abtastwerten zugeführt werden. Die Mittelwertbildungsschaltung weist dabei vorzugsweise ein um eine Abtastperiode verzögerndes Verzögerungsglied und eine diesem nachgeschaltete Summierschaltung mit zwei Eingängen auf. Dabei ist der eine Eingang der Summierschaltung mit dem Eingang des Verzögerungsglieds verbunden, während der zweite Eingang mit dem Ausgang des Verzögerungsglieds verbunden ist. Von dem Summensignal wird das den Mittelwert kennzeichnende Vorzeichen abgetrennt und dem zweiten Register zugeführt.

Die Anzahl der Registerstufen ist dabei so gewählt, daß der das Vorzeichen des aktuellen Abtastwerts enthaltenden Registerstufe des ersten Registers N Registerstufen vorgeschaltet sind, und daß zwischen die Summierschaltung und die den Nachlaufmittelwert und den Vorlaufmittelwert enthaltenden Registerstufen des zweiten Registers N-1 Registerstufen geschaltet sind. Bei einer solchen Ausführungsform werden der Flankenlogikeinrichtung bevorzugterweise die Ausgänge der Registerstufen des ersten Registers zugeführt, jedoch können stattdessen oder zusätzlich auch die Ausgänge des zweiten Registers der Flankenlogikeinrichtung zugeführt werden.

Die Integriereinrichtung ist in einer besonders bevorzugten Ausführungsform so aufgebaut, daß sie einen akkumulierenden Addierer aufweist, dem zu jedem Abtastzeitpunkt von einem Inkrementgenerator ein zu akkumulierendes Inkrement zugeführt wird. Die Größe des zugeführten Inkrements ist dabei im Verhältnis zum größten von dem Akkumulator darstellbaren Wert und zum Arbeitstakt so gewählt, daß der von 0 aus akkumulierende Addierer innerhalb einer Zeitdauer, die gleich der Zeitdauer eines Teletextbits ist, im zeitlichen Mittel möglichst exakt seinen Endwert erreicht. Bei dieser Ausführungsform der Integriereinrichtung wird zu dem Abtastzeitpunkt, bei welchem aufgrund der Inkrementaddition die Hälfte des Maximalwerts des Akkumulators erreicht oder überschritten wird, das Halbstandsignal erzeugt und das Restwertsignal in Form des Binärmusters ausgegeben, das bis auf das höchstwertige Bit mindestens die restlichen höherwertigen Stellen des Akkumulatorinhalts erfaßt.

Weitere Ausführungsformen der Erfindung ergeben sich aus den Unteransprüchen.

Die Erfindung wird nachstehend anhand einer bevorzugten Ausführungsform einer Teletextsignal-Abtrennvorrichtung unter Bezugnahme auf die Zeichnungen näher erläutert. In den Zeichnungen zeigen:
- Fig. 1: Aufbau einer Teletextdatenzeile;
- Fig. 2: skizzenhafte Darstellung der Phase zwischen berechneter Teletextbitmitte und aktuellem Abtastwert An, in Abhängigkeit vom Restwertsignal Rr;
- Fig. 3: Gesamtdarstellung einer besonders bevorzugten erfindungsgemäßen Ausführungsform der Teletextbit-Abtrennvorrichtung.

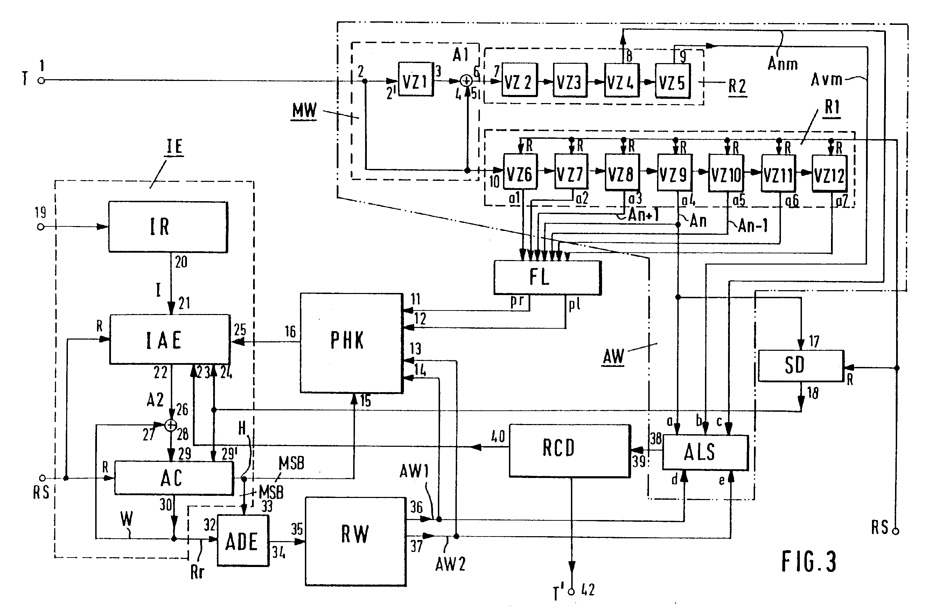

Fig. 3 zeigt eine besonders bevorzugte Ausführungsform einer erfindungsgemäßen Teletextsignal-Abtrennvorrichtung. Das Teletextsignal T wird von einer nicht in Fig. 3 gezeigten Einrichtung abgetastet, digitalisiert und einem Eingang 1 der Teletextsignal-Abtrennvorrichtung zugeführt. Die quantisierten Abtastwerte werden zur Interpolation einem Eingang 2 einer Mittelwertbildungsschaltung MW zugeführt. Die Mittelwertbildungsschaltung MW weist einen Addierer A1 und ein Verzögerungsglied VZ1 auf. Ein Eingang 2′ des Verzögerungsglieds VZ1 ist mit dem Eingang 2 der Mittelwertbildungsschaltung MW und einem Eingang 5 des Addierers A1 verbunden. Einem zweiten Eingang 4 des Addierers A1 werden die um einen Arbeitstakt verzögerten Abtastwerte, die an einem Ausgang 3 des Verzögerungsglieds VZ1 zur Verfügung stehen, zugeführt. Von der am Summenausgang 6 des Addierers A1 ausgegebenen Summe wird das das Vorzeichen darstellende Bit abgetrennt und einem Eingang 7 eines Registers R2 zugeführt. Das Register R2 besteht aus vier Verzögerungsgliedern VZ2... VZ5, die je um einen Arbeitstakt verzögern. Außer mit der Mittelwertbildungsschaltung MW ist der Eingang 1 der Teletextsignal-Abtrennvorrichtung auch mit einem Eingang 10 eines Registers R1 verbunden. Diese Verbindung ist so ausgeführt, daß nur die Vorzeichen der am Eingang 1 zugeführten Abtastwerte T an den Eingang 10 des Registers R1 bzw. des zu diesem Register gehörenden Verzögerungsglieds VZ6 gelangen. Das Register R1 besteht aus sieben in Reihe geschalteten Verzögerungsgliedern VZ6... VZ12. Jedes dieser Verzögerungsglieder verzögert um eine Arbeitstaktperiode. Jedes Verzögerungsglied des Registers R1 weist einen Eingang R auf, der mit einem Rücksetz-Eingang RS der Teletextsignal-Abtrennvorrichtung verbunden ist. Die Ausgänge a1....a7 der Verzögerungsglieder VZ6....VZ12 des Registers R1 werden den Eingängen einer Flankenlogikeinrichtung FL zugeführt. Zwei Ausgänge der Flankenlogikeinrichtung FL liefern Signalmuster pr und pl an eine Phasenkorrektureinrichtung PHK und sind mit deren Eingängen 11 und 12 verbunden. Die Signalmuster pr, pl bewirken gegebenenfalls eine Phasenkorrektur in der einen oder anderen Richtung, z.B. in Rechts- bzw. Linksrichtung. Der Ausgang a4 des Verzögerungsglieds VZ9 des Registers R1 ist außer mit der Flankenlogikeinrichtung FL auch mit einem Eingang a einer Auswahllogikschaltung ALS, die Teil einer Auswahleinrichtung AW ist, und einem Eingang 17 eines Startdetektors SD verbunden. Ein Eingang R des Startdetektors SD ist mit dem Rücksetz-Eingang RS verbunden. Mit zwei weiteren Eingängen b bzw. c der Auswahllogikschaltung ALS sind die Ausgänge 8 und 9 der Verzögerungsglieder VZ4 und VZ5 des Registers R2 verbunden. Eine Integriereinrichtung IE weist einen Inkrementgenerator IR auf. An einem Eingang 19 des Inkrementgenerators IR wird der Teletextsignal-Abtrennvorrichtung ein Inkrement I zugeführt. Ein Ausgang 20 des Inkrementgenerators IR ist mit einem Eingang 21 einer Inkrementänderungseinrichtung IAE verbunden. Ein weiterer Eingang 24 der Inkrementänderungseinrichtung IAE erhält über einen Ausgang 18 des Startdetektors SD einen den Akkumulationsvorgang auslösenden Startimpuls, der ferner dem Löscheingang 29′ des Akkumulators AC zugeführt ist. Ein Eingang 23 der Inkrementänderungseinrichtung IAE ist mit einem Ausgang 40 eines Rahmencodedetektors RCD verbunden. Ein Eingang 39 dieses Rahmencodedetektors RCD ist an einen Ausgang 38 der Auswahllogikschaltung ALS gekoppelt. Darüber hinaus weist der Rahmencodedetektor RCD einen Ausgang 42 auf, an dem die durch Schätzung bestimmten Teletextbits zur Verfügung stehen. Ein akkumulierender Addierer der Integriereinrichtung IE ist so aufgebaut, daß ein Eingang 26 eines Addierers A2 mit einem Ausgang 22 der Inkrementänderungeinrichtung IAE verbunden ist und ein Ausgang 30 eines Akkumulators AC den in diesem Akkumulator AC gespeicherten Wert W einem Eingang 27 des Addierers A2 zuführt, dessen Summierausgang 28 einem Eingang 29 des Akkumulators AC den neuen Wert übergibt. Für die nachfolgenden Betrachtungen wird als Beispiel angenommen, daß der Akkumulator AC ein Datenregister mit einer Bitbreite von 20 Stellen aufweist. Das höchstwertige Bit MSB des im Akkumulator AC gespeicherten Werts steht an einem Ausgang 31 des Akkumulators AC zur Verfügung. Dieser Ausgang 31 des Akkumulators AC ist mit einem Eingang 15 der Phasenkorrektureinrichtung PHK und einem Steuereingang 33 einer Adressiereinrichtung ADE verbunden, die als Torschaltung für das Restwertsignal Rr dient. Von dem am Ausgang 30 des Akkumulators AC zur Verfügung stehenden Datenwort werden das höchstwertige und die 13 niedrigstwertigen Bits abgetrennt. Die verbleibenden sechs Bit stellen das Restwertsignal dar und werden einem Eingang 32 der Adressiereinrichtung ADE zugeführt. Über einen Ausgang 34 der Adressiereinrichtung ADE wird eine sechs Bit breite Adresse einem Eingang 35 einer Restwertsignalbewertungseinrichtung RW zugeführt. Diese ist als RAM-Speicher ausgebildet, in dem eine Restwertsignalbewertungstabelle gespeichert ist. Zwei Ausgänge 36 und 37 der Restwertsignalbewertungseinrichtung RW, die ein Auswahlsteuersignal AW1 und AW2 abgeben, sind mit Eingängen 14 und 13 der Phasenkorrektureinrichtung PHK und mit Auswahleingängen d und e der Auswahllogikschaltung ALS verbunden. Ein Ausgang 16 der Phasenkorrektureinrichtung PHK ist mit einem Eingang 25 der Inkrementänderungseinrichtung IAE verbunden.

Die Arbeitsweise dieser in Fig. 3 dargestellten besonders bevorzugten Teletextsignal-Abtrennvorrichtung wird im folgenden beschrieben.

Von einer in Fig. 3 nicht gezeigten Einrichtung wird die Teletextbitfolge abgetastet und so aufbereitet, daß am Eingang 1 der Teletextsignal-Abtrennvorrichtung vorzeichenbehaftete binäre Abtastdatenwörter T anliegen, die mit dem Abstand einer Abtastperiode eintreffen. Da durch das positive bzw. negative Vorzeichen der einzelnen binären Abtastdatenworte angezeigt wird, ob es sich bei dem abgetasteten Teletextbit um eine "0" oder eine "1" handelt, reicht es aus, wenn nur die Vorzeichen weiterverarbeitet werden. Deshalb werden die Vorzeichen abgetrennt und dem Register R1 an dessen Eingang 10 zugeführt. Die Vorzeichen, die sich schon im Register R1 befinden, werden mit jedem Arbeitstakt, der identisch dem Abtasttakt ist, von Verzögerungsglied zu Verzögerungsglied weitergereicht. Außer dem Eingang 10 des Registers R1 werden die am Eingang 1 der Teletextsignal-Abtrennvorrichtung ankommenden Abtastwerte auch der Mittelwertbildungsschaltung MW zugeführt. In der Mittelwertbildungsschaltung werden jeweils zwei benachbarte aufeinanderfolgende Abtastwerte addiert, indem der jeweils vorausgehende Abtastwert durch das Verzögerungsglied VZ1 verzögert und gemeinsam mit dem nachfolgenden Abtastwert den zwei Eingängen des Addierers A1 zugeführt wird. Von der so gewonnenen Summe wird das Vorzeichen, welches den Mittelwert dieser zwei betrachteten Abtastwerte darstellt, abgespalten. Diese so ermittelten Mittelwerte werden dem zweiten Register R2 zugeführt. Die Grundidee, die hinter dieser Mittelwertbildung steht, ist eine scheinbare Verdoppelung der Abtastfrequenz und damit die Möglichkeit, anstatt auf einen Abtastwert, der weit von der Teletextbitmitte abliegt und daher so niedrig ist, daß er durch Störungen verfälscht sein kann, auf einen Quasi-Abtastwert zurückgreifen zu können, der dichter an der Teletextbitmitte liegt. Die an den Ausgängen 8 bzw. 9 des Registers R2 anstehenden binären Werte kennzeichnen die Werte des abgetasteten Teletextsignals in der Mitte zwischen dem an a4 anliegenden aktuellen Abtastwert und dem nachfolgenden Abtastwert bzw. vorausgehenden Abtastwert und werden als Nachlaufmittelwert Anm bzw. Vorlaufmittelwert Avm bezeichnet. Von den Kosten her ist eine solche Art der scheinbaren Verdoppelung der Anzahl der Abtastwerte, auch wenn die durch Mittelung gewonnenen zusätzlichen Abtastwerte nicht den genauen Wert des Teletextsignals zwischen zwei Abtastzeitpunkten liefern, eine gute Alternative zur aufwendigeren und teureren Verdoppelung der Abtastfrequenz. Bei Bedarf kann man eine noch genauere Interpolation durchführen, indem an der Mittelwertbildung mehr als zwei benachbarte Abtastwerte beteiligt werden. Mit dem fünften Arbeitstakt sind die Vorzeichen der Abtastwerte im Register R1 so weit durchgeschoben, daß das Vorzeichen des ersten Abtastwerts am Ausgang a4 des Verzögerungsglieds VZ9 anliegt. Zu diesem Zeitpunkt steht an den Ausgängen 8 bzw. 9 der zum Register R2 gehörenden Verzögerungsglieder VZ4 bzw. VZ5 der Nachlaufmittelwert bzw. Vorlaufmittelwert an, bei deren Bildung das als aktueller Abtastwert bezeichnete Vorzeichen, das am Ausgang a4 des Verzögerungsglieds VZ9 anliegt, beteiligt war. Je nach dem, an welcher Stelle des jeweilig betrachteten Teletextbits der aktuelle, an a4 anliegende Abtastwert liegt, wird zur Schätzung des Werts des betrachteten Teletextbits entweder der aktuelle Abtastwert selbst oder der Vorlauf- bzw. Nachlaufmittelwert verwendet. Dazu werden diese Größen einer zur Auswahleinrichtung gehörenden Auswahllogikschaltung ALS zugeführt. Wenn der Ausgang a4 zum ersten Mal von "0" auf "1" wechselt, gibt der Startdetektor SD an die Integriereinrichtung IE einen, einen Akkumulationsvorgang auslösenden Startimpuls. Die Erfindung setzt bei der Erkenntnis an, daß bei realen Teletextsignalen T die maximalen Signalamplituden im allgemeinen in der Mitte M der betrachteten Teletextbits liegen. Deshalb werden mit Hilfe der Integriereinrichtung IE die Zeitpunkte der Teletextbitmitten bestimmt. Zu diesem Zweck wird mittels der Integriereinrichtung IE die Periodendauer der Teletextbits nachgebildet und etwa in der Mitte der nachgebildeten Periodendauer das Halbstandsignal H erzeugt. Der Inhalt W des akkumulierenden Addierers wird mit jedem Arbeitstakt A um den Wert eines Inkrements I erhöht. Dieses Inkrement I ist im Inkrementgenerator IR, der als Register ausgebildet ist, gespeichert. Die Dimensionierung der Integriereinrichtung IE erfolgt so, daß dann, wenn aufgrund der von 0 aus startenden akkumulierenden Addition der höchste durch den Akkumulator AC darstellbare Wert Im erreicht wird, möglichst genau eine Teletextbitperiode vergangen ist. Aus dieser Forderung und der Tatsache, daß der Arbeitstakt sowie der größte durch den Akkumulator AC darstellbare Wert bekannt sind, läßt sich das benötigte Inkrement I berechnen. Da die von einer solchen Integriereinrichtung IE erzeugte Frequenz bzw. Periodendauer nur stufenweise geändert werden kann, muß die Bitbreite des Akkumulators AC so gewählt werden, daß die gewünschte Auflösung erreicht wird. Wenn aufgrund des akkumulierenden Addierens der Akkumulator AC die Hälfte seines Maximalwerts Im erreicht bzw. überschritten hat, wechselt das höchstwertige Bit seinen Zustand. Ein diesen Zustandswechsel anzeigendes Signal bildet das Halbstandsignal H, das die ungefähre Mitte des Teletextbits kennzeichnet und am Ausgang 31 der Integriereinrichtung IE zur Verfügung steht. Durch den Arbeitstakt A der Teletextsignal-Abtrennvorrichtung, der gleich der Abtastfrequenz ist, mit der das empfangene Teletextsignal abgetastet wird, sind die diskreten Zeitpunkte, zu denen ein Halbstandsignal auftreten kann, festgelegt. Am Ausgang 31 des Akkumulators AC wird das Halbstandsignal also mit dem Arbeitstakt abgegeben, der entweder genau beim Erreichen der Hälfte der nachgebildeten Periodendauer oder kurz danach auftritt. Durch das am Ausgang 31 ausgegebene Halbstandsignal wird die ungefähre Mitte der nachgebildeten Periodendauer bestimmt. Für eine genauere Aussage über die Lage der Mitte der nachgebildeten Periodendauer relativ zu dem mit dem Halbstandsignal auftretenden aktuellen Abtastwert liefert die Integriereinrichtung IE einen Restwert bzw. ein Restwertsignal Rr. Dieser Restwert, beispielsweise in Zweierkomplementdarstellung, kennzeichnet die Zeit zwischen dem Erreichen der Mitte M der nachgebildeten Periodendauer und dem Auftreten des mit dem nächsten Arbeitstakt abgegebenen Halbstandsignals. Wenn zunächst davon ausgegangen wird, daß die Mitte der nachgebildeten Periodendauer mit der tatsächlichen Mitte des jeweiligen Teletextbits zusammenfällt, wird durch den Restwert aufgezeigt, in welcher Richtung und wie stark der Zeitpunkt, an dem der aktuelle Abtastwert aufgetreten ist, von der zur Schätzung des Werts des Teletextbits als besonders günstig angenommenen Teletextbitmitte abweicht. Diese Information kann zur Verbesserung der Schätzung des Werts des aktuellen Teletextbits verwendet werden. Bei Anwendung des starren 2-3-Rhytmus wird auch dann ein durch den 2-3-Zählrhytmus vorbestimmter Abtastwert zur Schätzung des Werts des aktuellen Teletextbits verwendet, wenn dieser an einer der Teletextbitflanken liegt, obwohl dort die Spannung des betrachteten Teletextbits kleiner ist als in dessen Mitte und deshalb besonders gegen Verfälschung z.B. durch Rauschen empfindlich ist. Bei der Erfindung wird durch Auswertung des Restwerts erkannt, wo innerhalb eines Teletextbits der zum Zeitpunkt des jeweiligen Halbstandsignals aktuelle Abtastwert liegt. Der Wertebereich des Restwerts wird vorzugsweise in der in Fig. 2 gezeigten Weise in drei Bereiche eingeteilt. Bereich 1 umfaßt Restwerte, für die gilt: OG · Im < Rr < Im. Bereich 2 wird durch Restwerte, für die UG · Im ≦ Rr ≦ OG · Im gilt, gekennzeichnet, während der Bereich 3 Restwerte charakterisiert, für die 0 ≦ Rr < UG · Im gilt. In einer bevorzugten Ausführungsform der Erfindung wurde für OG (oberer Restschwellenwert) der Wert 0,75 und für UG (unterer Restschwellenwert) der Wert 0,25 gewählt. Je nach Anforderungen können auch andere Werte genommen werden. Mittels der drei Bereiche werden die aktuellen Abtastwerte in drei Gruppen eingeteilt: in eine Gruppe, bei der der zugehörige Restwert zeigt, daß sich der aktuelle Abtastwert in einem durch einen oberen bzw. unteren Restschwellenwert gekennzeichneten, um die Teletextbitmitte liegenden Bereich befindet, und in zwei weitere Gruppen, zu denen aktuelle Abtastwerte gehören, die im linken bzw. rechten Randbereich des Teletextbits T liegen. Die Bereichweiten und die Bereichsaufteilung können je nach der speziellen Ausführungsform anders gewählt werden. Bei der hier betrachteten Ausführungsform wird von einer Auslegung der Integriereinrichtung im Verhältnis zur Teletextbitbreite ausgegangen, bei welcher die Teletextbitmitte und ein Abtastzeitpunkt bei einem Restwert Rr gleich Im/2 zusammenfallen. Es sind auch andere Auslegungen möglich, bei denen dieses Zusammenfallen zum Beispiel bei Rr=O auftritt. In Fig. 2 wird der am Ausgang a4 des Verzögerungsglieds VZ9 anliegende aktuelle Abtastwert mit An bezeichnet, An+1 kennzeichnet den nachfolgenden und An-1 den vorausgehenden Abtastwert. In der Mitte zwischen An und An-1 liegt der durch gleitendes Mitteln bestimmte Vorlaufmittelwert Avm und zwischen An und An+1 liegt der Nachlaufmittelwert Anm. Diese zwei Werte sind in Fig. 2 ebenfalls dargestellt. Wenn der Restwert Rr ergibt, daß der aktuelle Abtastwert nicht im Bereich 2, also nicht in der Nähe der Teletextbitmitte liegt, wird zur Schätzung des Werts des Teletextbits nicht der aktuelle Abtastwert An verwendet. Liegt der aktuelle Abtastwert im Bereich 1, wird der aus An und An-1 gebildete Vorlaufmittelwert Avm zur Schätzung des Werts des aktuellen Teletextbits verwendet. Liegt der aktuelle Abtastwert im Bereich 3, wird der Wert aus dem aktuellen Abtastwert An und dem nachfolgenden Abtastwert An+1, die zusammen den Nachlaufmittelwert Anm bilden, geschätzt. In Fig. 2, dritte Zeile ist anhand eines sinusförmigen Teletextbits T aufgezeigt, daß diese Vorgehensweise sinnvoll ist, da für die Fälle, in denen die aktuellen Abtastwerte im Bereich 1 bzw. Bereich 3 liegen, Rauschen und/oder andere die Teletextbits verformende Störungen leicht zu einer falschen Schätzung führen.

Das Restwertsignal Rr, das wie oben beschrieben erzeugt wird, wird der Adressiereinrichtung ADE an deren Dateneingang 32 zugeführt, die dann, wenn das höchstwertige Bit des Akkumulators AC, das Halbstandsignal H, am Eingang 33 liegt, die Restwertsignalbewertungseinrichtung RW ansteuert. Die Restwertsignalbewertungseinrichtung RW wertet den Restwert aus, indem in Abhängigkeit von der Größe des Restwerts ein Auswahlsteuersignal AW1, AW2 an die Auswahleinrichtung AW abgegeben wird, das angibt, welcher der drei Gruppen der momentan aktuelle Abtastwert zuzuordnen ist. Da der Restwert Rr höchstens um einen Inkrementwert I vom halben Akkumulatorwert Im/2 abweichen kann, braucht für die Bewertung des Restwerts Rr die höchstwertige Stelle des Akkumulatorsignals W nicht beachtet zu werden. In der hier beschriebenen besonders bevorzugten Ausführungsform ist die Restwertsignalbewertungseinrichtung RW so ausgeführt, daß ein RAM-Speicher eine Restwertbewertungstabelle enthält, die durch das den Restwert kennzeichnende, sechs Bit breite Datenwort adressiert wird. Für eine feinere Auflösung könnte auch ein breiteres Datenwort und daraus folgend eine größere Restwertbewertungstabelle verwendet werden.

Das Auswahlsteuersignal AW1, AW2 stellt bei dieser Ausführungsform auch gleichzeitig das Korrektursteuersignal dar. Mittels des ihr von der Restwertbewertungseinrichtung RW zugeführten Auswahlsteuersignals AW1, AW2 bestimmt die Auswahllogikschaltung ALS, ob der aktuelle Abtastwert zur Schätzung des aktuellen Teletextbits verwendet werden soll oder ob, da der aktuelle Abtastwert schon etwas weiter von der Teletextbitmitte abliegt, der Vorlauf- bzw. Nachlaufmittelwert zur Schätzung dienen soll. Bei Bedarf können die Restwerte auch in mehr als drei Bereiche eingeteilt werden.

Bei einer erfindungsgemäßen Teletextsignal-Abtrennvorrichtung kann also die Schätzung flexibel auf die Lage des aktuellen Abtastwerts innerhalb des Teletextbits reagieren. Darüber hinaus kann die Lage des aktuellen Abtastwerts innerhalb des Teletextbits laufend beobachtet werden. Dies geschieht in der Flankenlogikeinrichtung FL. Der Flankenlogikeinrichtung FL werden eingangsseitig die Ausgangssignale aller sieben Verzögerungsglieder VZ6....VZ12 des, Registers R1 zugeführt. Da ein Teletextbit in dem hier betrachteten Beispiel durch etwa 2,5 Abtastwerte dargestellt wird, reichen die sieben im Register R1 gespeicherten Abtastwerte aus, um festzustellen, ob eine durch diese Abtastwerte dargestellte Flanke bzw. ein Nulldurchgang des Teletextsignals dem aktuellen Abtastwert zu nahe kommt. Die Flankenlogikeinrichtung FL weist eine Logikschaltung auf, die die an den Eingängen anliegenden Größen nach den boolschen Regeln verknüpft und an den Ausgängen der Flankenlogikeinrichtung FL ein Signalmuster pr, pl erzeugt, das die Phasenlage des jeweils aktuellen Abtastwerts in Bezug auf mindestens die diesem Abtastwert benachbarte Flanke der abgetasteten Teletextbitfolge kennzeichnet. Das Signalmuster pr,pl wird gemeinsam mit dem von der Restwertsignalbewertungseinrichtung RW gelieferten Korrektursteuersignal der Phasenkorrektureinrichtung PHK zugeführt, die dann, wenn der aktuelle Abtastwert von der Teletextbitmitte entfernt liegt, sich jedoch noch in dem durch den oberen und unteren Restschwellenwert gekennzeichneten Mittenbereich befindet, an die Inkrementänderungseinrichtung IAE ein Signal abgibt, durch das diese das Inkrement, das beim nächsten Arbeitstakt dem Akkumulatorinhalt hinzugezählt wird, ändert. In der hier beschriebenen Ausführungsform wird in Abhängigkeit von den durch die Flankenlogik gelieferten Werten für pl und pr eine einmalige Änderung des zu akkumulierenden Inkrements um den Differenzwert (I·f) bewirkt. Dabei ist f eine Korrekturgröße, die bei der gewählten Ausführungsform während der CRI-Bits und der FC-Bits +/-(1/8) und während der DA-Bits +/-(1/16) beträgt. Dieses geänderte Inkrement wird nur einmal während einer Akkumulationsperiode, nämlich beim Auftreten des Halbstandsignals addiert, während der restlichen Arbeitstakte wird jeweils das im Inkrementgenerator IR gespeicherte Inkrement I durch den Addierer akkumuliert. Der Akkumulator dient hierbei als Regelkreisfilter, das die unregelmäßigen Änderungen des Inkrementwertes in ihrer Wirkung auf die exakte Nachbildung der Teletextbitperiodendauer ausgleicht. Diese Vorgehensweise hat eine Änderung des Restwerts zur Folge und dies führt gegebenenfalls zu einer Änderung des Auswahlsteuersignals AW1, AW2 und damit zu einer Änderung der Auswahl aus dem aktuellen Abtastwert, dem Vorlaufmittelwert und dem Nachlaufmittelwert. Außerdem kann die Änderung des Restwerts dazu führen, daß das Halbstandsignal einen Abtastzeitpunkt früher bzw. später auftritt als zuvor und somit der neue aktuelle Abtastwert näher zur Mitte der nachgebildeten Periodendauer gelangt und damit näher zur Mitte des Teletextbits.

Der durch die Auswahllogikschaltung ALS mittels des Auswahlsteuersignals AW1,AW2 bestimmte Wert des aktuellen Teletextbits wird dem Rahmencodedetektor RCD übergeben, an dessen Ausgang 42 nach Erkennen des Rahmencodes FC die geschätzten Teletextdatenbits T′ byteweise ausgegeben werden. Am Ausgang 40 des Rahmencodedetektors RCD wird nach dem Erkennen des Rahmencodes FC ein Signal ausgegeben, durch das f von 1/8 auf 1/16 geändert wird. Damit wird die Phasenkorrektur gleichsam von Grob- auf Feinkorrektur umgeschaltet. Nachdem alle Teletextdatenbits empfangen wurden, werden durch ein am Rücksetz-Eingang RS anliegendes Signal der Akkumulatorinhalt, die Inkrementänderungseinrichtung IAE, der Startdetektor SD und die Ausgänge der Verzögerungsglieder des Registers R1 wieder auf 0 gesetzt. Dadurch bist die Teletextbit-Abtrennvorrichtung für den Empfang der nächsten Teletextdatenzeile vorbereitet.

## Patentansprüche

1. Signal-Abtrennvorrichtung, insbesondere Teletextsignalabtrennvorrichtung, mit einer Abtasteinrichtung, die eine mit einem Transportsignal empfangene Signalbitfolge mit einem Abtasttakt abtastet, dessen Frequenz höher ist als die Frequenz der Signalbitfolge,
und mit einer Verarbeitungseinrichtung zur Wiedergewinnung der Signalbitfolge aus den Abtastwerten,
dadurch gekennzeichnet,
daß die Verarbeitungseinrichtung folgende Merkmale aufweist:
a) eine Auswahleinrichtung (AW), die steuerungsabhängig den jeweils aktuellen Abtastwert (An) oder einen aus diesem aktuellen Abtastwert und dem jeweils vorausgehenden Abtastwert (An-1) gebildeten Vorlaufmittelwert (Avm) oder einen aus diesem aktuellen Abtastwert (An) und dem jeweils nachfolgenden Abtastwert (An+1) gebildeten Nachlaufmittelwert (Anm) bereitstellt;
b) eine Flankenlogikeinrichtung (FL), die ein Signalmuster erzeugt, das die Phasenlage des jeweils aktuellen Abtastwerts in Bezug auf mindestens die diesem Abtastwert benachbarten Flanken der abgetasteten Signalbitfolge kennzeichnet;
c) eine Integriereinrichtung (IE), die eine periodisch überlaufende Integration (W) bis zu einem Endwert (Im) durchführt,
wobei der erste Integrationsvorgang durch einen den Beginn eines ersten Signalbits kennzeichnenden Abtastwerts gestartet wird und der Integrand durch einen solchen Wert gebildet wird, daß das Überschreiten des Endwerts (Im) im wesentlichen mit dem Ende eines Signalbits (T) zusammenfällt,
wobei der Wert des Integranden (I) steuerungsabhängig änderbar ist ,
und wobei die Integriereinrichtung (IE) jeweils zu demjenigen Abtastzeitpunkt, bei welchem der Integrationswert dem halben Endwert (Im/2) am nächsten kommt, ein Halbstandsignal (H) abgibt sowie ein Restwertsignal (Rr), dessen Größe dem Abstand zwischen dem halben Endwert und dem zu diesem Abtastzeitpunkt auftretenden Integrationswert (W) entspricht;
d) eine Restwertsignalbewertungseinrichtung (RW), die in Abhängigkeit davon, ob der jeweilige Restwert zwischen einem unteren (UG) und einem oberen Restschwellenwert (OG), oberhalb des oberen Restschwellenwerts oder unterhalb des unteren Restschwellenwerts liegt, jeweils beim Auftreten des Halbstandsignals an die Auswahleinrichtung ein Auswahlsteuersignal (AW1, AW2) für die Auswahl des aktuellen Abtastwertes bzw. des Nachlaufmittelwerts bzw. des Vorlaufmittelwerts liefert, und die außerdem ein Korrektursteuersignal erzeugt, das anzeigt, ob sich der jeweilige Restwert innerhalb oder außerhalb eines vorbestimmten Restwertsignalbereichs befindet;
e) eine Phasenkorrektureinrichtung (PHK), die, wenn das von der Flankenlogikeinrichtung (FL) gelieferte Signalmuster (pr, pl) zeigt, daß sich der aktuelle Abtastwert bis auf einen vorbestimmten Abstand einer benachbarten Flanke des Signals genähert hat, in Abhängigkeit von dem Korrektursteuersignal dann eine Änderung des Werts des Integranden steuert, wenn das Restwertsignal innerhalb eines vorbestimmten Restwertsignalbereichs liegt;
f) und wobei die beiden Restschwellenwerte und die beiden Grenzen des Restwertsignalbereichs je beidseits desjenigen Restwertsignalwertes liegen, welcher sich beim Zusammenfallen des Zeitpunktes eines Abtastzeitpunkts und des Zeitpunkts des Auftretens des halben Endwerts ergibt.

2. Signal-Abtrennvorrichtung nach Anspruch 1,
dadurch gekennzeichnet,
daß die Auswahleinrichtung (AW) ein erstes Register (R1), ein zweites Register (R2) und eine dem zweiten Register vorgeschaltete Mittelwertbildungsschaltung (MW) aufweist, daß der Inhalt (a4) einer Registerstufe (VZ9) im Mittenbereich des ersten Registers (R1) jeweils den aktuellen Abtastwert (An) darstellt,
daß beidseits der den aktuellen Abtastwert (An) enthaltenden Registerstufe (VZ9) soviele Registerstufen vorhanden sind, daß
in der Nachbarschaft des aktuellen Abtastwertes auftretende Impulsflanken der Signalbitfolge (T) durch ihre Abtastwerte dargestellt werden und
daß das zweite Register (R2) mindestens zwei Registerstufen aufweist, in denen jeweils der dem aktuellen Abtastwert benachbarte Vorlauf- bzw. Nachlaufmittelwert (Avm, Anm) dargestellt werden.

3. Signal-Abtrennvorrichtung nach Anspruch 2,
dadurch gekennzeichnet,
daß die Mittelwertbildungsschaltung (MW) ein um eine Abtastperiode verzögerndes Verzögerungsglied (VZ1) und eine diesem nachgeschaltete Summierschaltung (A1) mit zwei Eingängen (4,5) aufweist, von den der eine (5) mit dem Eingang (2) des Verzögerungsglieds (VZ1) und der andere (4) mit dem Ausgang (3) des Verzögerungsglieds (VZ1) verbunden ist,
daß der den aktuellen Abtastwert (An) enthaltenden Registerstufe (VZ9) des ersten Registers (R1) N Registerstufen vorgeschaltet sind,
und daß zwischen die Summierschaltung (A1) und die den Nachlaufmittelwert (Anm) enthaltende Registerstufe (VZ4) des zweiten Registers (R2) N-1 Registerstufen geschaltet sind.

4. Signal-Abtrennvorrichtung nach den Ansprüchen 2 oder 3,
dadurch gekennzeichnet,
daß die Registerstufen (VZ2-VZ12) der beiden Register (R1, R2) lediglich die Vorzeichen der zugehörigen Abtastwerte bzw. Mittelwerte enthalten.

5. Singal-Abtrennvorrichtung nach mindestens einem der Ansprüche 2 bis 4,
dadurch gekennzeichnet,
daß die Flankenlogikeinrichtung (FL) durch eine die Ausgänge der Registerstufen (VZ6-VZ12) mindestens des ersten Registers (R1) verknüpfende Logikschaltung gebildet ist.

6. Signal-Abtrennvorrichtung nach den Ansprüchen 2 bis 5,
dadurch gekennzeichnet,
daß zwischen den Ausgang der den aktuellen Abtastwert (An) enthaltenden Registerstufe (VZ9) und einen Startsteuereingang (24, 29′) der Integriereinrichtung (IE) ein den Beginn eines ersten Signalbits detektierender Startdetektor (SD) geschaltet ist.

7. Signal-Abtrennvorrichtung nach den Ansprüchen 1 bis 6,
dadurch gekennzeichnet,
daß die Integriereinrichtung (IE) einen akkumulierenden Addierer (A2, AC) aufweist, dem zu jedem Abtastzeitpunkt von einem Inkrementgenerator (IR) ein zu akkumulierendes Inkrement (I) als Integrand zugeführt wird,
daß der Endwert (Im) des Addierers (A2, AC) und die Größe des Inkrements im Verhältnis zur Frequenz des Abtasttaktes (A) so gewählt sind,
daß der von 0 aus akkumulierende Addierer (A2, AC) innerhalb einer Zeitdauer, die gleich der Zeitdauer eines Signalbits ist, im zeitlichen Mittel möglichst exakt seinen Endwert erreicht, daß der Addierer (A2, AC) zu dem Abtastzeitpunkt, bei welchem er aufgrund der Inkrementaddition die Hälfte seines Endwerts (Im/2) erreicht oder überschreitet und daher das höchstwertige Bit des Addierers (A2, AC) seinen Binärwert wechselt, das Halbstandsignal (H) erzeugt und das Restwertsignal (Rr) in Form des Binärmusters abgibt, das durch die Inhalte mindestens der höchstwertigen Stufen des Addierers außer der das höchstwertige Bit enthaltenden Addierstufe gebildet wird.

8. Signal-Abtrennvorrichtung nach Anspruch 7,
dadurch gekennzeichnet,
daß dem Inkrementgenerator (IR) eine steuerbare Inkrementänderungseinrichtung (IAE) zugeordnet ist, die unter Steuerung durch die Phasenkorrektureinrichtung (PHK) das Inkrement (I) um einen Differenzwert (I·f) verändert, wobei f eine Korrekturgröße darstellt.

9. Signal-Abtrennvorrichtung nach den Ansprüchen 1 bis 8,
dadurch gekennzeichnet,
daß das Signal mit einer Reihe von Taktsynchronisationsimpulsen (CRI) beginnt, der sich ein Rahmencode (FC) anschließt, auf den schließlich die zu übertragenden Datenbits (DA) folgen,
daß der Auswahleinrichtung (AW) ein Rahmencodedetektor (RCD) nachgeschaltet ist,
daß die Korrekturgröße f der Inkrementänderungseinrichtung (IAE) auf unterschiedliche Werte steuerbar ist, und daß der Rahmencodedetektor (RCD) einen Korrekturgrößensteuerausgang (40) aufweist, über den er ab der Detektion des Rahmencodes (FC) eine kleinere Korrekturgröße f als vor der Detektion des Rahmencodes (FC) steuert.

10. Signal-Abtrennvorrichtung nach den Ansprüchen 8 oder 9,
dadurch gekennzeichnet,
daß die Inkrementänderungseinrichtung (IAE) die Korrektur des Inkrements (I) einmal pro Integrationsperiode durchführt, und zwar beim Auftreten des Halbstandsignals (H).

11. Signal-Abtrennvorrichtung nach den Ansprüchen 7 bis 10,
dadurch gekennzeichnet,
daß die Restwertsignalbewertungseinrichtung (RW) eine in einem Speicher abgelegte Bewertungstabelle aufweist, die unter Adressierung durch den jeweiligen Restwert (Rr) für die Auswahleinrichtung (AW) das Auswahlsteuersignal (AW1, AW2) und für die Phasenkorrektureinrichtung (PHK) das Korrektursteuersignal abgibt.

12. Signal-Abtrennvorrichtung nach den Ansprüchen 1 bis 11,
dadurch gekennzeichnet,
daß der untere und der obere Restschwellenwert (UG, OG) mit den Grenzen des Restwertsignalbereichs übereinstimmen und daß das Auswahlsteuersignal (AW1, AW2) gleichzeitig das Korrektursteuersignal bildet.

## Claims

1. Signal separator, particularly teletext-signal separator, comprising a sampling device which samples a signal bit sequence received with a transport signal at a sampling frequency higher than the frequency of the signal bit sequence, and
a processing device for recovering the signal bit sequence from the sample values,
characterized in
that the processing device has the following features:
a) a selection facility (AW) which, depending on control signals applied to it, provides the current sample value (An) or a preaverage value (Avm) formed from said current sample value and the preceding sample value (An-1) or a postaverage value (Anm) formed from said current sample value (An) and the subsequent sample value (An1);
b) an edge logic (FL) which generates a signal pattern which indicates the phase position of the current sample value relative to at least those edges of the signal bit sequence which are adjacent to said sample value;
c) an integrating unit (IE) which performs a periodically overflowing integration (W) up to a final value (Im), the first integration process being started by a sample value indicating the beginning of a first signal bit, and the integrand being formed by such a value that the instant at which the final value (Im) is exceeded coincides essentially with the end of a signal bit (T), the value of the integrand (I) being changeable by a control signal, and
the integrating unit (IE) delivering a center-crossing signal (H) at each sampling instant at which the integration value is closest to one-half of the final value (Im/2), and a residual-value signal (Rr) whose magnitude corresponds to the distance between one-half of the final value and the integration value (W) occurring at said sampling instant;
d) a residual-value-signal-evaluating device (RW) which, on the occurrence of each center-crossing signal and depending on whether the respective residual value lies between a lower residual threshold value (UG) and an upper residual threshold value (OG), above the upper residual threshold value, or below the lower residual threshold value, delivers to the selection facility a selection control signal (AW1, AW2) for selecting the current sample value, the postaverage value, or the preaverage value, respectively, and which also provides a correction control signal which indicates whether the respective residual value is within or outside a predetermined residual value signal range;
e) a phase corrector (PHK) which when the signal pattern (pr, pl) delivered by the edge logic (FL) indicates that the current sample value has approached an adjacent edge of the signal up to a predetermined distance, controls a change of the value of the integrand in dependence upon the correction control signal if the residual-value signal lies within a predetermined residual value signal range, and
f) the two residual threshold values and the two limits of the residual value signal range each lie on both sides of that residual value signal value which is obtained if a sampling instant and the instant of occurrence of half the final value coincide.

2. A signal separator as claimed in claim 1,
characterized in
that the selection facility (AW) comprises a first register (R1), a second register (R2), and an averaging circuit (MW) preceding the second register,
that the contents (a4) of a register stage (VZ9) in the center region of the first register (R1) represent the respective current sample value (An),
that on both sides of the register stage (VZ9) containing the current sample value (An), so many register stages are present that pulse edges of the signal-bit sequence (T) which occur in the neighbourhood of the current sample value are represented by their sample values, and
that the second register (R2) has at least two register stages in which the preaverage and postaverage values (Avm, Anm) adjacent to the current sample value are represented.

3. A signal separator as claimed in claim 2,
characterized in
that the averaging circuit (MW) contains a one-sampling-period delay element (VZ1) followed by an adder (A1) having two inputs (4, 5) one (5) of which is connected to the input (2) of the delay element (VZ1) and the other (4) of which is connected to the output (3) of the delay element (VZ1),
that the register stage (VZ9) of the first register (R1) containing the current sample value (An) is preceded by N register stages, and
that N-1 register stages are connected between the adder (A1) and the register stage (VZ4) of the second register (R2) containing the postaverage value (Anm).

4. A signal separator as claimed in claim 2 or 3,
characterized in
that the register stages (VZ2-VZ12) of the two registers (R1, R2) contain only the signs of the associated sample values and average values, respectively.

5. A signal separator as claimed in at least one of claims 2 to 4,
characterized in
that the edge logic (FL) is formed by a logic circuit combining the outputs of the register stages (VZ6-VZ12) of at least the first register (R1).

6. A signal separator as claimed in claims 2 to 5,
characterized in
that a start detector (SD) detecting the start of a first signal bit is connected between the output of the register stage (VZ9) containing the current sample value (An) and a start control input (24, 29′) of the integrating unit (IE).

7. A signal separator as claimed in claims 1 to 6,
characterized in
that the inteqratinq unit (IE) includes an accumulating adder (A2, AC) to which an increment (I) to be accumulated is fed as an integrand from an increment generator (IR) at each sampling instant,
that the final value (Im) of the accumulating adder (A2, AC) and the magnitude of the increment are so chosen in relation to the frequency of the sampling clock (A) that on a time average, the accumulating adder (A2, AC), which accumulates from 0, reaches its final value as exactly as possible within a period equal to the period of one signal bit, and that at the sampling instant at which the accumulating adder (A2, AC) reaches or exceeds one-half of its final value (Im/2) as a result of the increment addition, so that the most significant bit of the accumulating adder (A2, AC) changes its binary value, the accumulating adder (A2, AC) generates the center-crossing signal (H) and delivers the residual-value signal (Rr) in the form of a binary pattern which is formed by the contents of at least the most significant stages of the adder except the adding stage containing the most significant bit.

8. A signal separator as claimed in claim 7,
characterized in
that the increment generator (IR) has a controllable increment changer (IAE) associated therewith which changes the increment (I) by a difference value (I · f) under control of the phase corrector (PHK), where f is a correction quantity.

9. A signal separator as claimed in claims 1 to 8,
characterized in
that the signal begins with a number of clock synchonizing pulses (CRI) followed by a frame code (FC) followed finally by the data bits (DA) to be transmitted,
that the selection facility (AW) is followed by a frame code detector (RCD),
that the correction quantity f of the increment changer (IAE) is controllable to assume different values, and that the frame code detector (RCD) has a correction quantity control output (40) via which it controls a correction quantity f after detection of the frame code (FC) smaller than that prior to the detection of the frame code (FC).

10. A signal separator as claimed in claim 8 or 9,
characterized in
that the increment changer (IAE) performs the correction of the increment (I) once per integration period, namely on the occurrence of the center-crossing signal (H).

11. A signal separator as claimed in claims 7 to 10,
characterized in
that the residual-value-signal-evaluating device (RW) contains an evaluation table which is stored in a memory and, when addressed by the respective residual value (Rr), provides the selection control signal (AW1, AW2) for the selection facility (AW) and the correction control signal for the phase corrector (PHK).

12. A signal separator as claimed in claims 1 to 11,
characterized in
that the lower and upper residual threshold values (UG, OG) coincide with the limits of the residual value signal range, and that the selection control signal (AW1, AW2) also forms the correction control signal.

## Revendications

1. Dispositif de sectionnement de signal, notamment dispositif de sectionnement de signal de télétexte. comprenant un dispositif d'échantillonnage, qui échantillonne un débit binaire de signal reçu avec un signal porteur, avec une période d'échantillonnage dont la fréquence est supérieure à la fréquence du débit binaire de signal, et un dispositif de traitement servant à récupérer le débit binaire de signal à partir des valeurs d'échantillonnage,
caractérisé en ce que le dispositif de traitement comporte les particularités suivantes :
a) un dispositif de sélection (AW), qui, en fonction d'une commande, met à disposition la valeur d'échantillonnage actuelle (An) chaque fois considérée et la valeur moyenne antérieure (Avm), formée à partir de cette valeur d'échantillonnage actuelle et de la valeur d'échantillonnage (An-1) qui la précède ou une valeur moyenne postérieure (Anm) formée à partir de cette valeur d'échantillonnage actuelle (An) et de la valeur d'échantillonnage (An+1) qui la suit,
b) un dispositif de logique de flancs (FL), qui produit un motif de signal qui caractérise la relation de phase de la valeur d'échantillonnage actuelle considérée au moins vis-à-vis des flancs du débit binaire de signal échantillonné qui sont voisins de cette valeur d'échantillonnage,
c) un dispositif d'intégration (IE), qui exécute une intégration à dépassement de capacité (W), périodique, jusqu'à une valeur finale (Im),
la première opération d'intégration étant déclenchée par une valeur d'échantillonnage caractérisant le début d'un premier bit de signal et l'intégrant étant formé par une valeur telle que le franchissement de la valeur finale (Im) vers le haut coïncide pratiquement avec la fin d'un bit de signal (T),
tandis que la valeur de l'intégrant (I) peut être modifiée en fonction d'une commande
et que le dispositif d'intégration (IE) délivre, chaque fois à l'instant d'échantillonnage auquel la valeur d'intégration s'approche au plus près de la demi-valeur finale (Im/2), un signal de mi-position (H), ainsi qu'un signal de valeur de reste (Rr) dont la grandeur est égale à l'écart entre la demi-valeur finale et la valeur d'intégration (W) se présentant à cet instant d'échantillonnage,
d) un dispositif d'évaluation de signal de valeur de reste (RW), qui délivre, chaque fois que le signal de mi-position se présente sur le dispositif de sélection, un signal de commande de sélection (AW1, AW2) pour la sélection entre la valeur d'échantillonnage actuelle, la valeur moyenne postérieure et la valeur moyenne antérieure, suivant que la valeur de reste correspondante est située entre une valeur inférieure de seuil de reste (UG) et une valeur supérieure de seuil de reste (OG), au-dessus de la valeur supérieure de seuil de reste ou au-dessous de la valeur inférieure de seuil de reste, et qui produit par ailleurs un signal de commande de correction qui indique si la valeur de reste considérée est située à l'intérieur ou à l'extérieur d'un domaine préfixé de signaux de valeur de reste,
e) un dispositif de correction de phase (PHK), qui, lorsque le motif de signal (pr, pl) fourni par le dispositif de logique de flancs (FL) montre que la valeur d'échantillonnage actuelle s'est approchée, à un écart préfixé près, d'un flanc voisin du signal, commande une modification de la valeur de l'intégrant, en fonction du signal de commande de correction, lorsque le signal de valeur de reste est situé à l'intérieur d'un domaine préfixé de signaux de valeur de reste,
f) les deux valeurs de seuil de reste et les deux limites du domaine de signaux de valeur de reste étant situées respectivement d'un côté et de l'autre de la valeur du signal de valeur de reste qui se présente lorsque l'instant correspondant à un instant d'échantillonnage et l'instant où la demi-valeur finale se présente coïncident.

2. Dispositif de sectionnement de signal selon la revendication 1, caractérisé
en ce que le dispositif de sélection (AW) comprend un premier registre (R1), un second registre (R2) et un circuit de formation de valeur moyenne (MW) disposé en amont du second registre,
en ce que le contenu (a4) d'un étage de registre (VZ9) situé dans la zone centrale du premier registre (R1) représente chaque fois la valeur d'échantillonnage actuelle (An),
en ce que, de chaque côté de l'étage de registre (VZ9) contenant la valeur d'échantillonnage actuelle (An), il est prévu autant d'étages de registre qu'il existe de flancs d'impulsion du débit binaire de signal (T) se présentant au voisinage de la valeur d'échantillonnage actuelle qui sont représentés par leurs valeurs d'échantillonnage et
en ce que le second registre (R2) comporte au moins deux étages de registre dans lesquels sont chaque fois représentées les valeurs moyennes respectivement antérieure et postérieure (Avm, Anm) voisines de la valeur d'échantillonnage actuelle.

3. Dispositif de sectionnement de signal selon la revendication 2, caractérisé
en ce que le circuit de formation de valeur moyenne (MW) comprend un organe de retard (VZ1), réalisant un retard égal à une période d'échantillonnage, et, disposé en aval de cet organe, un circuit de sommation (A1) comportant deux entrées (4, 5) dont l'une (5) est reliée à l'entrée (2) de l'organe de retard (VZ1) et l'autre (4) est reliée à la sortie (3) de l'organe de retard (VZ1),
en ce que N étages de registre sont disposés en amont de l'étage (VZ9) du premier registre (1) qui contient la valeur d'échantillonnage actuelle (An)
et en ce que N-1 étages de registre sont disposés entre le circuit de sommation (A1) et l'étage (VZ4) du second registre (R2) qui contient la valeur moyenne postérieure (Anm).

4. Dispositif de sectionnement de signal selon la revendication 2 ou 3, caractérisé en ce que les étages (VZ2-VZ12) des deux registres (R1, R2) ne contiennent que les signes des valeurs d'échantillonnage ou valeurs moyennes correspondantes.

5. Dispositif de sectionnement de signal selon au moins l'une des revendications 2 à 4, caractérisé en ce que le dispositif de logique de flans (FL) est formé d'un circuit logique procédant à des opérations logiques sur les sorties des étages (VZ6-VZ12) d'au moins le premier registre (R1).

6. Dispositif de sectionnement de signal selon les revendications 2 à 5, caractérisé en ce qu'un détecteur de départ (SD), qui détecte le début d'un premier bit de signal, est disposé entre la sortie de l'étage de registre (VZ9) contenant la valeur d'échantillonnage actuelle (An) et une entrée de commande de départ (24, 29′) du dispositif d'intégration (IE).

7. Dispositif de sectionnement de signal selon les revendications 1 à 6, caractérisé
en ce que le dispositif d'intégration (IE) comprend un circuit d'additionA2, AC) à action cumulative auquel un incrément (I) à cumuler est envoyé en tant qu'intégrant par un générateur d'incrément (IR) à chaque instant d'échantillonnage,
en ce que la valeur finale (Im) du circuit d'addition (A2, AC) et la grandeur de l'incrément sont choisies, vis-à-vis de la fréquence de la période d'échantillonnage (A), d'une façon telle que le circuit d'addition (A2, AC) à action cumulative à partir de O atteint sa valeur finale de la manière la plus exacte possible, en moyenne dans le temps, dans les limites d'une durée qui est égale à la durée d'un bit de signal,
et en ce qu'à l'instant d'échantillonnage auquel, du fait de l'addition d'incréments, le circuit d'addition (A2, AC) atteint ou franchit vers le haut la moitié de sa valeur finale (Im/2) et auquel le bit de poids le plus fort du circuit d'addition (A2, AC) change de valeur binaire, ce circuit d'addition (A2, AC) produit le signal de mi-position (H) et délivre le signal de valeur de reste (Rr) sous forme du motif binaire qui est formé, en dehors de l'étage de circuit d'addition contenant le bit de poids le plus fort, au moins par les contenus des étages de poids les plus forts du circuit d'addition.

8. Dispositif de sectionnement de signal selon la revendication 7, caractérisé en ce qu'il est associé au générateur d'incrément (IR) un dispositif de modification d'incrément (IAE) qui est agencé de façon à pouvoir être commandé et qui modifie l'incrément (I) d'une valeur de différence (I . f) sous l'effet d'une commande du dispositif de correction de phase (PHK), f représentant une grandeur de correction.

9. Dispositif de sectionnement de signal selon les revendications 1 à 8, caractérisé
en ce que le signal commence par une série d'impulsions de synchronisation (CRI) qui est suivie d'un code de format (FC) qui est finalement suivi par les bits de données (DA) à transmettre,
en ce qu'un détecteur de code de format (RCD) est disposé en aval du dispositif de sélection (AW),
en ce que la grandeur de correction f du dispositif de modification d'incrément (IAE) peut être réglée à différentes valeurs
et en ce que le détecteur de code de format (RCD) comprend une sortie de commande de grandeur de correction (40) par laquelle, à compter de la détection du code de format (FC), il commande une grandeur de correction f qui est plus petite qu'avant la détection du code de format (FC).

10. Dispositif de sectionnement de signal selon la revendication 8 ou 9, caractérisé en ce que le dispositif de modification d'incrément (IAE) procède à la correction de l'incrément (I) une seule fois par période d'intégration, à savoir lors de l'apparition du signal de mi-position (H).

11. Dispositif de sectionnement de signal selon les revendications 7 à 10, caractérisé en ce que le dispositif d'évaluation de signal de valeur de reste (RW) comprend une table d'évaluation qui est déposée dans une mémoire et qui, lors d'un adressage par la valeur de reste considérée (Rr), délivre le signal de commande de sélection (AW1, AW2) pour le dispositif de sélection (AW) et le signal de commande de correction pour le dispositif de correction de phase (PHK).

12. Dispositif de sectionnement de signal selon les revendications 1 à 11, caractérisé
en ce que la valeur inférieure de seuil de reste (UG) et la valeur supérieure de seuil de reste (OG) coïncident avec les limites du domaine de signaux de valeur de reste
et en ce que le signal de commande de sélection (AW1, AW2) constitue en même temps le signal de commande de correction.
